(19) Europäisches Patentamt
European Patent Office
Office européen des brevets

(11) **EP 1 109 034 B1**

(12) **EUROPÄISCHE PATENTSCHRIFT**

(45) Veröffentlichungstag und Bekanntmachung des Hinweises auf die Patenterteilung:
**28.01.2009 Patentblatt 2009/05**

(51) Int Cl.:
*G01V 1/42* (2006.01)   *E21B 44/00* (2006.01)
*B25D 16/00* (2006.01)

(21) Anmeldenummer: **00811161.9**

(22) Anmeldetag: **07.12.2000**

(54) **Verfahren und Einrichtung zur Untersuchung und Identifizierung der Art eines Untergrundes**

Method and apparatus for investigation and identification of the nature of the underlying surface

Procédé et dispositif permettant l'investigation et l'identification de la nature d'une surface sous-jacente

(84) Benannte Vertragsstaaten:
**CH DE FR GB LI NL SE**

(30) Priorität: **16.12.1999 DE 19960824**

(43) Veröffentlichungstag der Anmeldung:
**20.06.2001 Patentblatt 2001/25**

(73) Patentinhaber: **HILTI Aktiengesellschaft**
**9494 Schaan (LI)**

(72) Erfinder:
• **Bongers, Hans-Werner**
**81477 München (DE)**
• **Böni, Hans**
**9470 Buchs (CH)**
• **Schaer, Roland**
**9472 Grabs (CH)**
• **Schmitzer, Harald**
**6800 Feldkirch (AT)**

(74) Vertreter: **Wildi, Roland et al**
**Hilti Aktiengesellschaft,**
**Feldkircherstrasse 100,**
**Postfach 333**
**9494 Schaan (LI)**

(56) Entgegenhaltungen:
EP-A- 0 771 619            WO-A-96/25881
WO-A-98/01736            DE-A- 4 334 933
GB-A- 2 333 155           US-A- 3 464 503
US-A- 5 289 885

**Beschreibung**

Die Erfindung betrifft ein Verfahren und eine dieses Verfahren nutzende Einrichtung zur Untersuchung und Identifizierung der Art eines für den Abbau vorgesehenen Untergrunds und zur Bereitstellung mindestens eines Betriebsparameters zur optimierten Voreinstellung eines Abbaugeräts.

Zum optimalen Abbau unterschiedlicher Materialien, wie Beton, Ziegel, Fliesen, etc., insbesondere auch zum Erzeugen von dübeltauglichen Löchern in diesen Materialien werden zur Zeit verschiedene, auf das Material spezialisierte Geräte verwendet. Sollen die verschiedenen Untergrundarten mit nur einem Gerät, insbesondere mit einem Bohrhammer, bearbeitet werden können, so müssen zumindest einige Geräteparameter wie "Schlagfrequenz", "Einzelschlagenergie" und "Drehzahl" einstellbar sein. Soll ferner zur Erleichterung der Bedienung eines solchen Abbaugeräts die Einstellung mindestens einzelner dieser Parameter automatisch erfolgen, so ist eine automatische Erkennung des Untergrunds erforderlich.

Aus dem Bereich der Materialprüfung sind diverse Verfahren bekannt, um gewisse Materialeigenschaften zu bestimmen. Speziell zum Thema "zerstörungsfreie Materialprüfung im Bauwesen" wird auf Lit. [1] und [2] verwiesen (siehe die als Anhang beigefügte Literaturliste). Aus dem Bereich Bergbau ist von Aquila Mining Systems, Ltd. (www.aquilaltd.com/aquila/aquila.htm) ein Verfahren bekannt, bei welchem durch Analyse von Vibrationen die Art des zu bearbeitenden Untergrunds in Echtzeit bestimmt werden kann. Ebenfalls aus diesem Bereich ist ein Verfahren bekannt, mit welchem eine automatische Erkennung von unterschiedlichen Gesteinstypen durch Messung der Bohrparameter, wie Drehmoment, Anpreßkraft, Drehzahl und Bohrgeschwindigkeit möglich sein soll (Lit. [3]).

In der Patentdruckschrift DE 3 518 370 (vergleiche Lit. [4]) ist ein Verfahren beschrieben, bei welchem beim Gesteinsbohren die Stoßwelle geregelt wird. Dabei wird die gemessene Stoßwelle bzw. davon abgeleitete Größen, wie Spektrum, Abklingverhalten, Amplitudenwerte, mit einem Sollwert verglichen. Über die Veränderung einer oder mehrerer Stellgrößen, wie Schlagfrequenz, Schlagkraft, Drehgeschwindigkeit, Drehmoment und/oder Vorschubkraft wird die Abweichung der Meßgröße zum Sollwert minimal gehalten.

Aus der Maschinenindustrie sind auch Verfahren bekannt, bei welchen durch Analyse von Hörschall z. B. Lagerschäden erkannt werden können. Ähnliche Verfahren werden in der Qualitätskontrolle, z. B. zur Prüfung von Fliesen, angewandt (vergleiche (Lit. [5] und [6]).

Dieser Stand der Technik ist im Hinblick auf die mit der Erfindung verfolgte Zielsetzung mit folgenden Problemen oder Nachteilen behaftet:

- Die in der Materialprüfung angewendeten Verfahren sind aufwendig, benötigen eine spezielle Testeinrichtung oder sind nicht automatisierbar und/oder online_anwendbar.

- Tastversuche bei Vibrationsanalysen zeigten, daß beispielsweise bei handgeführten Bohrhammergeräten eine Untergrunderkennung aufgrund der Analyse der Gehäusevibration nicht möglich ist. Denkbar wäre die Erkennung über eine Analyse der Werkzeuge - z. B. der Bohrervibrationen. Deren Messung ist aber bei Abbaugeräten der hier in Rede stehenden Art, insbesondere bei Bohrhammergeräten nur sehr schwierig zu realisieren. Die Untergrunderkennung durch Messung der Bohrparameter ist außerdem nur mögich, wenn sämtliche erwähnten Größen bekannt sind, da sie sich stark gegenseitig beeinflussen. Es wird also eine sehr umfangreiche Sensorik benötigt. Nicht zuletzt besteht auch eine große Abhängigkeit vom jeweils verwendeten Werkzeug, also beispielsweise dem Bohrer.

Der Erfindung liegt damit die Aufgabe zugrunde, ein Verfahren und eine Einrichtung anzugeben, durch die während oder unmittelbar vor einem Abbauvorgang, also beispielsweise einem Bohrvorgang, eine Erkennung der Art des für den Abbau vorgesehenen Untergrunds erfolgt, um mit Hilfe der so gewonnenen Daten mindestens einige für einen optimalen Abbauvorgang wesentliche Betriebsparameter des Abbaugeräts automatisch einstellen zu können.

Diese Aufgabe wird bei einem eingangs allgemein definierten Verfahren zur Untersuchung und Identifizierung eines für den Abbau vorgesehenen Untergrunds dadurch gelöst, daß vor oder zu Beginn und während eines Abbauvorgangs eine in einem Werkzeug des Abbaugeräts erzeugte oder induzierte Stoßwelle erfaßt und aus dem so gemessenen Stoßwellen-Signal mindestens ein für den Untergrund charakteristisches Merkmal extrahiert und zur Klassifizierung des Untergrunds mittels eines Algorithmus' ausgewertet wird.

Die Erkennung des Untergrunds erfolgt durch eine algorithmische Analyse von Longitudinalwellen. Diese können z. B. direkt im Werkzeug gemessene Stoßwellen oder die vom Werkzeug oder Untergrund abgestrahlten Schallwellen, insbesondere Hörschallwellen sein.

Für eine genauere Auswertung ist vorgesehen bei der Klassifizierung des Untergrunds zusätzlich mindestens eine externe, auf das Abbaugerät wirkende Kraft, beispielsweise die Anpreßkraft, in die nachfolgende Signalverarbeitung miteinzubeziehen.

Die Messung der Stoßwelle kann durch Sensoren erfolgen, welche beispielsweise auf dem magnetoelastischen (ME) Effekt basieren, auf der Basis von Dehnmeßstreifen oder auf der Basis von Oberflächenwellen. Die Messung von Schallwellen, insbesondere von Luftschallwellen, erfolgt z. B. durch ein Mikrofon.

In der nachfolgenden Merkmalsextraktion werden gewisse Eigenschaften, z. B. Abklingverhalten, Spektren und Energie der gemessenen Signale mittels geeigneter Algorithmen berechnet, wie sie nachfolgend anhand von Beispielen, jedoch ohne Einschränkung des der Erfindung zugrundeliegenden Kerngedankens beschrieben werden. Aufgrund dieser Eigenschaften wird in der nachfolgenden Klassifikation entschieden, um welchen Untergrund es sich in einem konkreten Anwendungsfall handelt. Als weitere Hilfsgröße für diese Entscheidung kann zusätzlich eine extern wirkende Kraft, insbesondere die Anpreßkraft des Gerätenutzers, verwendet werden. Im einfachsten Fall dient diese Hilfs- oder Zusatzgröße zur genaueren Berechnung bzw. Auswertung der jeweils anfallenden Signal-Cluster.

Es ist von Vorteil und verbessert die Genauigkeit der Untergrundklassifikation erheblich, wenn mehrere Merkmale berechnet und deren Ergebnisse dann gewichtet zu einem Gesamtentscheid zusammengefaßt werden. Dazu können Verfahren, die dem Bereich der sogenannten "künstlichen Intelligenz" zuzuordnen sind, z. B. Fuzzy-Logiksysteme oder neuronale Netze, eingesetzt werden. Die nachfolgende Tabelle 1 gibt eine Übersicht über die verschiedenen Möglichkeiten zur Signalerfassung und Merkmalsextraktion bei der Untergrunderkennung einschließlich des verwendeten Werkzeugs, insbesondere des verwendeten Bohrers.

Tabelle 1:

| Erkennung von Untergrund und Werkzeug (Bohrer) durch Messung und Analyse von Longitunalwellen | | |
|---|---|---|
| Hörschall Messung mit Mikrophon | | Körperschall/Stoßwelle Messung mit ME-Sensor Dehnungsmeßstreifen (DMS) Oberflächenwellen |
| Analyseverfahren | | |
| Zeitbereichsmethoden | FFT-basierte Merkmale | Methoden basierend auf autoregressiven (AR) Modellen |
| - Extremwerte <br> - Energie-Quantil <br> - Schlaglänge/-Abfall <br> - Bandpassfilterung | - Mittelwert <br> - Symmetrie der ersten Eigenfrequenz <br> - Energie <br> - Schwerpunkt | - Dämpfung <br> - Lage der Eigenfrequenzen <br> - Schwerpunkt der Spektren |

Eine zur Zeit bevorzugte und erprobte Variante zur Untersuchung und Identifizierung der Art eines für den Abbau mittels eines Bohrhammers vorgesehenen Untergrunds einschließlich Identifizierung des vom Benutzer vorgesehenen Bohrers basierend auf der Messung und Analysierung der Stoßwelle im Bohrer wird nachfolgend unter Bezug auf die Zeichnung näher erläutert.

**Fig. 1** verdeutlicht die Prinzipanordnung für die Messung und Erkennung eines zu bearbeitenden Untergrunds gemäß der Erfindung;

**Fig. 2** veranschaulicht die Darstellung eines Fuzzy-Sets $A_i$ mit der Orien- tierung 1.; und

**Fig. 3** zeigt in einem Zeit-Amplitudendiagramm die relative Stärke der Reflexionen einer Stosswelle im Werkzeug.

Die Untergrundbestimmung erfolgt bei dieser erprobten Ausführungsvariante der Erfindung durch Berechnung von vier Merkmalen und einer anschließenden gewichteten Entscheidung.

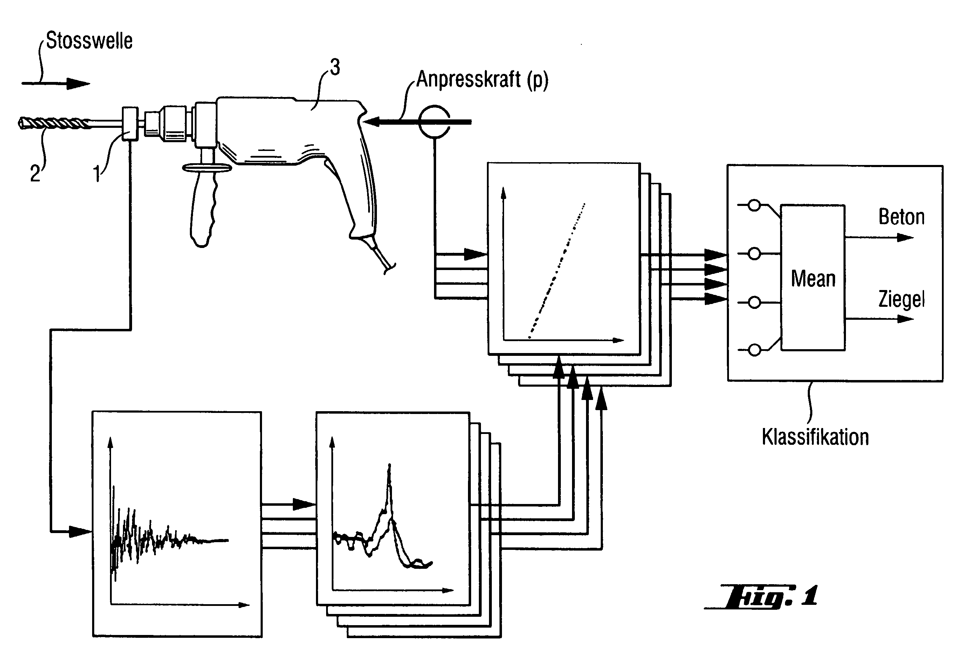

Wie Fig. 1 der Zeichnung erkennen läßt, wird zur Messung der Stoßwelle im Bohrer 2 eines Bohrhammers 3 ein Sensor 1 verwendet, welcher nach dem magnetoelastischen Effekt arbeitet (vergleiche [Lit. 7]). Der ME-Sensor 1 umgibt den Schaft des Bohrers 2 ringförmig und besteht im wesentlichen aus einer durch ein weichmagnetisches Material umgebenen Erregerwicklung sowie einer ebenfalls innerhalb der weichmagnetischen Ummantelung angeordneten, den Bohrerschaft innerhalb der Erregerwicklung umgebenden Sensorspule. Bei der meßtechnischen Verifizierung des erfindungsgemäßen Verfahrens wurde für einen Bohrer 2 mit einem Schaftdurchmesser von 10 mm ein Sensor mit einem Schaftdurchmesser von 10,6 mm und einer axialen Länge von ca. 18 mm verwendet. Die Speisung der Erregerwicklung erfolgte mit einem Gleichstrom von 2 A. Die Erregerwicklung hatte 390 Windungen, einen Drahtdurchmesser von 0,5 mm und einen ohmschen Widerstand von 3,8 $\Omega$. Für die innerhalb der Erregerwicklung angeordnete Sensorspule wurden folgende Werte zugrundegelegt: Windungsanzahl 540, Drahtdurchmesser 0,13 mm, Spulenwiderstand 37 $\Omega$.

Die nachfolgende Beschreibung der zur Zeit bevorzugten Algorithmen zur Merkmalsextraktion für die Untergrundbestimmung erfolgt für einen speziellen Bohrertyp. Dabei kann ohne Einschränkung der Allgemeinheit analog vorgegangen werden, da sich unterschiedliche Bohrer nur durch die Verwendung unterschiedlicher Parametereinstellungen am Bohrhammer 3 und Gewichte bzw. Fuzzy-Regeln bei der Erstellung der Endentscheidung unterscheiden. Das nachfolgend beschriebene Verfahren wird angegeben für einen Bohrer von 6 mm Durchmesser und ca. 170 mm Länge.

Mit der Merkmalsextraktion für die Untergrundbestimmung verknüpft, aber den eigentlichen Algorithmen zur Untergrunderkennung vorgeschaltet, ist die Bohrererkennung, welche die richtige Voreinstellung der bohrerabhängigen Geräteparameter erlaubt.

Alle in diesem Ausführungsbeispiel beschriebenen Methoden basieren auf der Analyse von Einzelschlägen $E_i$, die in zueinander synchronisierten Fenstern mit einer festgelegten Länge von beispielsweise 1024 Tastwerten betrachtet werden. Die Tastwerte eines Schlages $E_m$ werden mit $s_{m,i}$ (i aus [1,1024]) bezeichnet. Synchronisiert bedeutet im vorliegenden Zusammenhang, daß die Schlaganfänge relativ zum Fensteranfang immer an der gleichen Stelle sind.

Zur vorgeschalteten Berechnung des Bohrertyps wird zunächst das gemittelte Spektrum einer bestimmten Anzahl von anfänglichen Tastwerten, beispielsweise der ersten 256 Tastwerte aller zuvor erkannten und separierten Einzelschäge berechnet:

$$\overline{F}(\omega) = \frac{1}{n} \sum_{i=1}^{n} F_i(\omega), \qquad (1)$$

wobei $F_i = |FFT(S_{i,1..1024})|$ die Einzelspektren der Einzelschläge sind. Die Variable $\omega$ steht für den Index der die gesuchte Frequenz beschreibt. Für dieses gemittelte Spektrum werden dann beispielsweise drei Eigenfrequenzen bestimmt, d. h. lokale Maxima in vorgegebenen Bereichen. Aufgrund der zweiten und dritten Eigenfrequenz wird dann Länge und Durchmesser des Bohrers über einen Fuzzy-Regelalgorithmus vom Sugeno-Typ berechnet, was weiter unten noch näher erläutert wird.

Bei der Merkmalsberechnung des Untergrunds, wird zwischen zwei anwendbaren Mittelungsverfahren unterschieden:

1. Mittelung der für die Einzelschläge berechneten Merkmalswerte: $M_E = Mean(M(E_i))$

2. Berechnung des Merkmals für das im Zeitbereich bestimmte Mittel der Einzelschläge $M_E = M(Mean(E_i))$.

Bei der nachfolgend beschriebenen Berechnung einzelner charakteristischer Merkmale wird, falls nicht anders angegeben, das Mittelungsverfahren 1 verwendet.

Das erste Merkmal **M1** (nachfolgend auch als **FFT-Mean** bezeichnet), wird berechnet als die mittlere Amplitude des energienormierten Spektrums $F_{en}$, ermittelt durch die Anwendung einer auf 1024 Abtastpunkte bezogenen Fast-Fourier-Transformation (FFT) eines Einzelschlags. Das Eingangssignal wird vor einer FFT noch hochpaßgefiltert, beispielsweise mittels eines FIR-Filters mit linearer Phase mit Ordnung 22 und Grenzfrequenz 10 KHz (vergleiche (Lit. [10], Abschnitt FIR1). Das Merkmal M1 ergibt sich damit zu

$$M_1 = \overline{F}_{en} = \frac{1}{n} \sum_{\omega=1}^{n} F_{en}(\omega), \qquad (2)$$

wobei F das FFT-Spektrum des aktuellen Einzelschlages ist.

Die energienormierten Spektren $F_{en}(i)$ werden berechnet gemäß der Formel:

$$F_{en}(\omega) = \frac{F(\omega)}{\sum_{\theta=1}^{n} F(\theta)^2} \qquad (3)$$

Bei diesem Merkmal M1 wird zur Mittelung das oben angegebene Mittelungsverfahren 2 herangezogen.

Für das zweite Merkmal **M2** werden jeweils n-Proben (Samples), beginnend mit dem Schlagbeginn betrachtet, beispielsweise n = 15 für den oben erwähnten 6/17-Bohrer, was einem Kurzzeitfenster von 0,15 ms entspricht. Für dieses Kurzzeitsignal wird dann eine Spektralabschätzung durch Berechnung eines autoregressiven Modells (AR-Modell) durchgeführt. Das verwendete AR-Modell besitzt die Ordnung o= 5 und wird über Anwendung eines auf Burg zurückgehenden Iterationsverfahrens (Burg-Iterationsverfahren) berechnet; vergleiche (Lit. [8] und [9], Kapitel Matlabfunktion: AR). Das Ergebnis sind die Filterkoeffizienten eines rekursiven Filters. Anschließend wird das zugehörige Spektrum $F_{AR}$ beispielsweise für 128 Punkte bestimmt; (vergleiche in Lit. [8], [9] Matlabfunktion TH2FF). Von diesem Spektrum wird dann in einem bohrerspezifischen Bereich, beispielsweise im Bereich von 4 bis 14 KHz für den 6/17-Bohrer, nach der Frequenz $f_m$ mit dem maximalen Amplitudeneintrag gesucht.

Für dieses Maximum werden anschließend folgende vier Kennzahlen berücksichtigt:

1. Amplitude: $F_{AR}(f_m)$
2. Frequenz: $f_m$
3. Geometrisch definierte Dämpfung D:

$$D = \frac{\sum_{i=f_m - \Delta_f}^{f_m + \Delta_f} F_{AR}(i)}{2c\Delta f} \qquad (4)$$

4. Lineare Verknüpfung von Frequenz und Ampitude => Kombinationsfunktion CO:

$$CO(f_m, F_{AR}(f_m)) = af_m + bF_{AR}(f_m) + c \qquad (5)$$

Abhängig vom jeweiligen Bohrertyp wird jeweils die am besten geeignete Kennzahl ausgewählt. Die jeweilige Auswahl ist für jeden Bohrertyp vordefiniert, und wird durch Optimierung auf Referenzdaten bestimmt. Für den 6/17-Bohrer, der hier betrachtet wird, ist dies die Kombinationsvariante "4" mit den Parametern a = 1/15, b = 13/1500 und c = -265/3. Damit ergibt sich das zweite Merkmal zu:

$$M_2 = \frac{f_m}{15} + \frac{13F_{AR}(f_m)}{1500} - \frac{265}{3} \qquad (6)$$

Wie sich aus dem Obigen ergibt, läßt sich das Merkmal **M2** auch als **AR-Spectral-Damping** bezeichnen.

Ähnlich dem obigen Bestimmungsverfahren zum Merkmal M2 werden auch beim dritten Merkmal **M3** AR-Modelle benutzt. Es werden hier jedoch andere Modellparameter und ein anderes Iterationsschema gewählt: Die Ordnung ist 5, das Eingangssignal hat eine Länge von 22 Proben (Samples) und verwendet wird die Vorwärts-Rückwärts-Methode (forward-backward-approach), d. h., die MatlabFunktion für AR mit Argument "fb" (vgl. in Lit. [8], [9] Metlabfunktion TH2FF). Als Ergebnis erhält man auch in diesem Fall die Filterkoeffizienten $a_i$ des assoziierten rekursiven Filters. Aus diesen Koeffizienten werden die Pole $P_i$ des Filters berechnet, übergeführt in die S-Ebene (log) und konjugiert komplexe Polpaare gesucht. Von diesen konjugiert komplexen Polpaaren werden die Pole mit positiver Frequenz berücksichtigt und entsprechend ihrer jeweiligen Dämpfung (Realteil) sortiert. Für den Pol mit der geringsten Dämpfung $P_m$ wird dann überprüft, ob er in dem für den betreffenden Bohrer gesuchten Intervall [f- $\Delta_f$, f + $\Delta_f$] liegt. Dieses Intervall ist abhängig von der zu Beginn durchgeführten Merkmalsextraktion für einen jeweiligen Bohrertyp - wobei in diesem Fall der 6/17-Bohrertyp erkannt wurde - hinsichtlich des Merkmals M3, festgelegt durch f = 10 kHz und $\Delta f$ = 5 kHz. Erfüllt der Pol diese Bedingung, so ist der Wert dieses dritten Merkmals M3 - auch als **AR-Koeffizienten-Dämpfung bezeichnet** - gleich der Dämpfung des Pols

$$M_3 = \mathrm{Re}(P_m) \qquad\qquad (7)$$

Erfüllt der Pol diese Bedingung nicht, so wird der betreffende aktuelle Einzelschlag beim zugrundegelegten ersten Mittelungsverfahren nicht berücksichtigt.

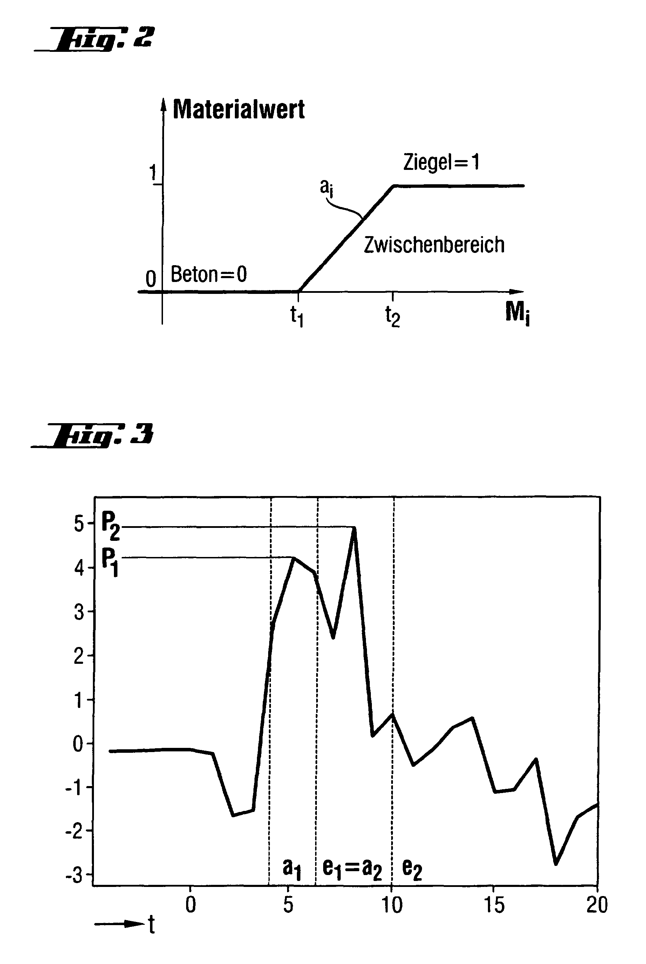

Um die unterschiedliche Stärke des Reflexionen der Stosswelle als viertes Merkmal **M4** zu verwenden, werden Sprunghöhen im Zeitbereich, also im Signal $s_i$ analysiert. Entscheidend ist hierbei das erste und zweite positive Maximum $P_1$ bzw. $P_2$, bzw. die Differenz dieser beiden Maxima (vgl. Fig. 3):

$$P_j = \max_{i = a_j}^{e_j} s_i.$$

mit j $\in$ 1,2, d. h. der Nummer des Maximums und $a_j$ dem Anfang bzw. $e_j$ dem Ende des Suchintervals. Bei einer verwendeten Abtastfrequenz von 100 kHz werden für das Paar (s,e) jeweils (4,6) bzw. (6,10) eingesetzt. Das vierte Merkmalauch als Sprunghöhen im Zeitbereich bezeichnet - ergibt sich dann zu

$$M_4 = P_1 - P_2 \qquad\qquad (8)$$

Bevor die Merkmale $M_i$ (z. B. i = 1, 2, 3, 4) ausgewertet werden, ist es von Vorteil noch eine von der Anpreßkraft des Gerätebenutzers abhängige Korrektur durchzuführen. Diese Korrektur erfolgt nach der allgemeinen Formel

$$M'_i = M_i - f_{i,B}(p). \qquad\qquad (9)$$

wobei B den Index des erkannten Bohrers und p den gemittelten Anpreßdruck angeben. Der Vorteil dieser Korrektur ist es, daß der Einfluß des Anpreßdrucks p auf die Merkmale $M_i$ eliminiert wird und damit nur der Einfluß des Materials, das untersucht werden soll, übrig bleibt. Aus Gründen der einfachen Darstellung wird nachfolgend wieder die Bezeichnung $M_i$ für die einzlnen Merkmale geschrieben, wobei implizit jeweils das korrigierte Merkmal $M'_i$ darunter verstanden wird.

Im Falle des als Beispiel hier untersuchten 6/17-Bohrers werden folgende Korrekturfunktionen zugrundegelegt:

$$f_1 = 8.7 - \frac{p}{100}$$

$$f_2 = 0 \qquad\qquad (10)$$

$$f_3 = 1.4 - 50p$$

$$f_4 = -1$$

Die Form und Koeffizienten der Korrekturfunktion wurden durch Optimierung aus den Referenzdaten gewonnen.

Die angegebene Indizierung entspricht der oben mit Bezug auf die Merkmale $M_i$ verwendeten, z. B. "1 = FFT-Mean". Der Bohrerindex B (6/17=1,8/17=2,10/17=3 usw.) wurde, weil für diese Ausführungsvariante immer fix (6/17-Bohrer) weggelassen. Funktionen, welche unabhängig von p sind, dienen nur der Verschiebung des Wertebereichs, so daß hinsichtlich dieser Merkmale die Materialgrenze bei 0 liegt. Materialgrenze "0" bedeutet, daß alle Merkmale für Beton Werte kleiner 0 und für Ziegel größer 0 liefern sollten.

Unter Verwendung der ermittelten Merkmalswerte $M_i$ wird anschließend eine **gewichtete Entscheidung** mittels eines Fuzzy-Systems getroffen.

Bei der Kombination der einzelnen Merkmale $M_i$ wird ein Fuzzy-Interferenzsystem basierend auf der Sugeno-Methode angewendet. Wie nachfolgend erläutert, ist die gewichtete Entscheidung ein Spezialfall dieser Interferenztechnik. Allgemein sind Fuzzy-Regelsysteme vom Typ Sugeno (vergleiche (Lit. [11], [12]) aufgebaut aus Regeln der Form

$$R^i, w_i : \text{WENN } x_1 \text{ ist } A_1^i \text{ UND } \ldots \text{ UND } x_k \text{ ist } A_k^i$$

$$\text{DANN } u_i = p_0^i + p_1^i x_1 + \cdots + p_k^i x_k , \qquad (11)$$

mit:

$A_j$: unscharfe Menge, die durch Zugehörigkeitsfunktionen festgelegt sind

$x_j$: scharfe Eingangsgröße = Merkmalswerte $M_j$

$P_j^i$: Parametergewicht zu $x_j$

$u_i$: Ausgangsgröße der i-ten Regel

$w_i$: Gewicht der i-ten Regel bei der Berechnung der Entscheidung.

Der Ausgang dieses Interferenzsystems ist dann gegeben durch

$$u = \frac{\sum w_i u_i \mu_i}{\sum w_i u_i}, \qquad (12)$$

wobei $\mu_i$ den Erfülltheitsgrad der i-ten Prämisse angibt. Diser Erfülltheitsgrad berechnet sich basierend auf der verwendeten T-Norm, d. h. der Verknüpfung der einzelnen Bedingungen "$x_j = A_j^i$" über

$$\mu_i = \overset{n}{\underset{j=1}{T}}(a_i^j(x_j)),\qquad (13)$$

mit $a_i^j$, als die das Fuzzyset $A_i^j$ beschreibende Zugehörigkeitsfunktion.

Als T-Norm wird das algebraische Produkt gewählt. Eine andere Möglichkeit wäre z. B. die sog. Min-Funktion zu verwenden.

In einer konkreten Ausführungsvariante wurde eine vereinfachte Regel von folgender Form angewendet:

$$R^i,w_i:\ \text{WENN } x_1 \text{ ist } A_1^i \text{ DANN } u_i = 1,\qquad (14)$$

wobei die Fuzzysets $A_1^i$ stückweise lineare Funktionen gemäß Fig. 2 wiedergeben.

Diese Fuzzysets sind dann jeweils durch die Angabe von zwei Parametern $t_1$ und $t_2$ definiert. Durch die Parameterorientierung o kann festgelegt werden, ob Fuzzysets beschrieben werden, die links 0 (Orientierung 0) und rechts 1 (Orientierung 1) oder links 1 oder rechts 0 (Orientierung -1) sind.

Für den Ausgabewert ergibt sich bei dieser speziellen Form:

$$u = \frac{\sum\limits_{i=1} w_i a_i(x_i)}{\sum\limits_{i=1}^{n} w_i}\qquad (15)$$

Die endgültige Entscheidung wird dann über Abfrage eines einfachen Schwellenwerts (Threshold) durchgeführt, d. h. im dargestellten Beispiel der Fig. 2:

$u < t_B \Rightarrow$ "Untergrundmaterial ist Beton"

$u \geq t_B \Rightarrow$ "Untergrundmaterial ist Ziegel".

Der Schwellenwert $t_B$ hängt vom erkannten Bohrer ab und beträgt für den hier als Beispiel betrachteten 6/17-Bohrer 0,5. Für diesen konkreten Fall sind folgende Parameter gemäß nachfolgender Tabelle 2 einzusetzen:

Tabelle 2:

| Merkmal | Gewicht $w_i$ | Parameter $t_1$ | Parameter $t_2$ | Orientierung |
|---|---|---|---|---|
| Mean-FFT | 1 | -0.5 | 0, 5 | -1 |
| AR-Spectral-Damping | 2 | -1 | 1 | 1 |
| AR-Coefficient-Damping | 1 | 16000 | 22000 | -1 |
| Peakdifferenz | 1 | 0,5 | 0,5 | -1 |

**Literaturliste:**

Lit. [1]:    Schickert, G., Vorträge und Plakatberichte Internationales Symposium Zerströungsfreie Prüfung im Bauwesen, Deutsche Gesellschaft für Zerstörungsfreie Prüfung e.V., Berlin; 1991.

Lit. [2]:    Schickert, G., Wiggenhauser H., International Symposium Non-Destructive Testing in Civil Engineering (NDT-CE), Deutsche Gesellschaft für Zerstörungsfreie Prüfung e. V., Berlin; 1995.

Lit. [3]:    Pollitt, M. et al, Lithological interpretation based on monitored drilling performance paramters, CIM Bulletin, Volume 84, Nr. 985, July 1991, Page 25-29.

Lit. [4]:    Uitto V., Verfahren zur Optimierung von schlagenden Gesteinsbohrungen, Patentschrift DE 3 518 370, 1985.

Lit. [5]:    Wagner, J., Automatische Qualitäts-Kontroll-Systeme für Dachziege- lindustrie, Keramische Zeitschrift, 47. Jahrgang, Ausgabe 6-1995.

Lit. [6]:    Jonuscheit, H., Neuronale Netze in der Produktion, Design & Elektronik.

Lit. [7]:    Hecker, R., Schröder, P., Nutzung mechanischer u. elektromechanischer Effekte zur Messung elastischer Wellen in Stäben, tm 11/95, R. Oldenburg Verlag.

Lit. [8]:    Kammeyer, K., Kroschel K., Digital Signalverarbeitung, Teubner Studien- bücher-Elektronik: 1998.

Lit. [9]:    Mathworks Inc., Matlab-Manual: System Identifikation Toolbox, Mathworks Inc.: 1998.

Lit. [10]:    Mathworks Inc., Matlab-Manual: Signal Processing Toolbox, Mathworks Inc.: 1998

Lit. [11] :    Mathworks Inc., Matlab-Manual: Fuzzy Logic Toolbox, Mathworks Inc.: 1998.

Lit. [12]:    Kruse, et al, Fuzzy Systeme, Teubner Verlag 1989.

**Patentansprüche**

1. Verfahren zur Untersuchung und Identifizierung der Art eines für den Abbau mittels eines Bohrhammers vorgesehenen Untergrunds und zur Bereitstellung mindestens eines Betriebsparameters zur optimierten Voreinstellung des Bohrhammers, bei dem vor oder zu Beginn eines Abbauvorgangs eine in dem Werkzeug des Bohrhammers erzeugte oder induzierte Stoßwelle erfasst und aus dem so gemessenen Stoßwellen-Signal mindestens ein für den Untergrund charakteristisches Merkmal extrahiert und zur Klassifizierung des Untergrunds mittels eines Algorithmus' ausgewertet wird, um mit Hilfe der so gewonnenen Daten mindestens einige für einen optimalen Abbauvorgang wesentliche Betriebsparameter des Bohrhammers automatisch einzustellen.

2. Verfahren nach Anspruch 1, **dadurch gekennzeichnet, dass** bei der Klassifizierung des Untergrunds zusätzlich mindestens eine externe auf den Bohrhammer wirkende Kraft (p) berücksichtigt wird.

3. Verfahren nach Anspruch 1 oder 2, **dadurch gekennzeichnet, dass** die Stoßwelle durch einen Sensor (1) erfasst wird, der auf dem magnetoelastischen Effekt, auf dem Prinzip des Dehnungsmessstreifens oder auf dem Prinzip der Oberflächenwellenmessung basiert.

4. Verfahren nach Anspruch 1 oder 2, **dadurch gekennzeichnet, dass** die Stoßwelle durch Messung der **dadurch** verursachten Luftwellen mittels eines Mikrofons erfasst wird.

5. Verfahren nach Anspruch 3, **dadurch gekennzeichnet, dass** die Longitudinalkomponente der Stoßwelle in einer Werkzeugachse des Bohrhammers (3) mittels eines Sensors (1) auf der Basis des magnetoelastischen Effekts erfasst wird.

6. Verfahren nach einem der vorstehenden Ansprüche, bei dem die im jeweils eingesetzten Bohrer (2) als Werkzeug induzierte Stoßwelle erfasst und das Stoßwellensignal algorithmisch analysiert wird zur Gewinnung des mindestens einen, über die Stoßwelle einerseits den Bohrer und andererseits den Untergrund charakterisierenden Merkmals zur On-line-Einstellung mindestens eines der Betriebsparameter "Schlagfrequenz", "Einzelschlagenergier" und/oder "Drehzahl".

7. Verfahren nach Anspruch 6, **dadurch gekennzeichnet, dass** die Extraktion des mindestens einen charakteristischen Merkmals zur Identifizierung des Untergrunds mittels einen Algorithmus' erfolgt, der eine Mehrzahl von einzelnen Bohrhammerschlägen entsprechenden, in Tastwerte digitalisierte Stoßwellensignale ($E_i$) innerhalb von zueinander hinsichtlich der Schlaganfänge zeitsynchronisierten Fenstern analysiert, und dass aus den berechneten Merkmalswerten der einzelnen Bohrhammerschläge durch ein Mittelungsverfahren ein charakteristischer Merkmalswert ($M_1$ bis $M_4$) bestimmt wird.

8. Verfahren nach Anspruch 6, **dadurch gekennzeichnet, dass** bei der Mittelung die für die einzelnen Bohrhammerschläge berechneten Merkmalswerte zugrunde gelegt werden ($M_E$ = Mean ($M(E;)$).

9. Verfahren nach Anspruch 6, **dadurch gekennzeichnet, dass** bei Bestimmung der Merkmalswerte das im Zeitbereich bestimmte Mittel der einzelnen Bohrhammerschläge zugrunde gelegt wird ($M_E$ = Mean ($M(E_i)$)).

10. Verfahren nach Anspruch 7, **dadurch gekennzeichnet, dass** vor der algorithmischen Untergrundidentifizierung eine Werkzeugidentifizierung und entsprechende Voreinstellung von Betriebsparametern des Bohrhammers erfolgt, bei der das gemittelte Spektrum einer festgelegten Anzahl von Tastwerten der Stoßwellensignale der bei einem Messablauf erfassten Einzelschlagspektren berechnet und daraus mehrere Eigenfrequenzen, d. h. lokale Maxima in vorgegebenen Bereichen, bestimmt werden, von denen wenigstens zwei zur Bestimmung von für die Betriebsparameter-Voreinstellung erforderlichen Werkzeugparametern mittels eines Fuzzy-Regelalgorithmus' verwendet werden.

11. Verfahren nach Anspruch 9, **dadurch gekennzeichnet, dass** ein Fuzzy-Regelalgorithmus vom Sugeno-Typ verwendet wird.

12. Verfahren nach einem der Ansprüche 7 bis 9, **dadurch gekennzeichnet, dass** die algorithmisch-analytische Untergrundidentifizierung unter Berücksichtigung von mehreren oder allen der folgenden charakteristischen Merkmale (M1 1 bis M4) erfolgt, von denen

- **ein erstes** (M1) die im Zeitbereich gemäß dem Mittelungsverfahren nach Anspruch 8 berechnete mittlere Amplitude des energienormierten Spektrums ($F_{en}$) eines Einzelschlag-Stoßwellensignals über das berücksichtigte Fenster beinhaltet,
- ein **zweites** (M2) unter Berücksichtigung eines werkzeugspezifischen Frequenzbereichs die Maximalamplitude ($F_{AR}(f_m)$) bzw. deren zugehörigen Frequenzwert ($f_m$) aus einer Spektralabschätzung mittels eines autoregressiven Modells eines nur wenige festgelegte Digitalwerte innerhalb des Fenster berücksichtigenden Kurzzeitsignals oder die über den Frequenzbereich bestimmte Dämpfung oder eine lineare Kombinationsfunktion ($CO(f_m, F_{AR}(f_m))$) aus der Maximalamplitude ($F_{AR}$) und dem zugehörigen Frequenzwert ($f_m$) angibt;
- ein **drittes** (M3) den minimalen Dämpfungswert eines Pols eines Filters innerhalb eines durch die Werkzeugparameter bestimmten Frequenzintervalls ($\Delta_f$) darstellt, wobei die Pole aus den Filterkoeffizienten eines assoziierten rekursiven Filters, bestimmt über ein autoregressives Modell eines Einzelschlag-Stoßwellensignals unter Anwendung festgelegter Modellparameter für positive Frequenzwerte, errechnet werden, und
- ein **viertes** (M4) die Differenz zweier Maxima gleichen Vorzeichens des Stoßwellensignals im Zeitbereich innerhalb eines Suchintervalls angibt, und dass

die mehreren oder alle Merkmale ($M_1$ bis $M_4$) bei der Entscheidung zur Materialbestimmung des Untergrunds über ein Fuzzy-Interferenzsystem mit jeweils zugeordneter Gewichtung bewertet werden.

13. Verfahren nach Anspruch 9, **dadurch gekennzeichnet, dass** die Merkmale vor einer Bewertung über das Fuzzy-Interferenzsystem jeweils um einen von der Anpresskraft (p) und/oder dem jeweiligen Werkzeug (2) abhängigen Faktor korrigiert werden.

14. Einrichtung an oder in Zuordnung zu einem Bohrhammer für den Abbau eines Untergrunds zur Untersuchung und Identifizierung der Art des abzubauenden Untergrunds mit einem eine Stoßwelle im Abbauwerkzeug (2) erfassenden Sensor (1) und einer elektronischen Prozessoreinheit, welche das von dem Sensor gelieferte Stoßwellensignal gemäß einem in wenigstens einem der vorstehenden Ansprüche definierten Verfahren auswertet und mit Hilfe der so gewonnenen Daten mindestens einige für einen optimalen Abbauvorgang wesentliche Betriebsparameter des Bohrhammers automatisch einstellt.

**Claims**

1. Method for investigation and identification of the nature of an underlying surface provided for dismantling and demolition and for the provision of at least one operational parameter for the optimised pre-adjustment of the jackhammer, which, before or at the beginning of a dismantling or demolition procedure, acquires a shock wave produced or induced in the tool of the jackhammer, and, from the shock wave signal measured in this way, at least one feature which is characteristic of the underlying surface is extracted and evaluated for the classification of the underlying surface by means of an algorithm, in order, with the assistance of the data acquired in this way, to adjust at least some of the operational parameters of the jackhammer which are essential for an optimum dismantling or demolition procedure.

2. Method according to Claim 1, **characterised in that**, in the classification of the underlying surface, in addition at least one external force (p) taking effect on the jackhammer is taken into account.

3. Method according to Claim 1 or 2, **characterised in that** the shock wave is acquired by a sensor (1), which is based on the magneto-elastic effect, on the principle of the expansion measuring strip, or on the principle of the surface wave measurement.

4. Method according to Claim 1 or 2, **characterised in that** the shock wave is acquired by the measurement of the air waves caused by it, by means of a microphone.

5. Method according to Claim 3, **characterised in that** the longitudinal component of the shock wave in a tool axis of the jackhammer (3) is acquired by means of a sensor (1) on the basis of the magneto-elastic effect.

6. Method according to one of the foregoing Claims, with which the shock wave induced in the drill (2) used in each case as a tool is acquired, and the shock wave signal is analysed by algorithm, in order to obtain at least one feature characterising the drill on the one hand and the underlying surface on the other, for the on-line adjustment of at least one of the operational parameters, "impact frequency", "individual impact energy", and/or "revolution speed".

7. Method according to Claim 6, **characterised in that** the extraction of the minimum of one characterising feature for the identification of the underlying surface is effected by means of an algorithm, which analyses a plurality of individual shock wave signals ($E_i$) corresponding to jackhammer impacts and digitalised into sampling values inside windows which are time-synchronised in respect of the start of the impacts, and that, from the feature values calculated of the individual jackhammer impacts, a characteristic feature value ($M_1$ to $M_4$) is determined by way of an averaging method.

8. Method according to Claim 6, **characterised in that**, for the averaging, the feature values calculated for the individual jackhammer impacts are taken as the basis ($M_E$ = Mean ($M(E_i)$)).

9. Method according to Claim 6, **characterised in that**, in the determination of the feature values, the mean determined in the time range of the individual jackhammer impacts is taken as the basis ($M_E$ = Mean ($M(E_i)$)).

10. Method according to Claim 7, **characterised in that**, before the algorithmic underlying surface identification, a tool identification and corresponding pre-adjustment of operational parameters of the jackhammer are carried out, for which the spectrum determined of a set number of sampling values of the shock wave signals calculated from the individual impact spectra acquired during one measurement sequence, and from this several natural frequencies, i.e. local maxima, are determined in predetermined ranges, from which at least two tool parameters required for the determination of the operational parameter pre-adjustment are used, by means of a fuzzy rule algorithm.

11. Method according to Claim 9, **characterised in that** a fuzzy rule algorithm of the Sugeno type is used.

12. Method according to one of Claims 7 to 9, **characterised in that** the algorithmic-analytical underlying surface identification is carried out by taking account of several or all of the following characteristic features (M1 to M4), of which:

    - **A first one** (M1) contains the mean amplitude, calculated in the time range according to the averaging method according to Claim 8, of the energy-normalised spectrum ($F_{en}$) of an individual impact shock wave signal over the window taken into consideration,

- **a second one** (M2), by taking account of a tool-specific frequency range, indicates the maximum amplitude ($F_{AR(fm)}$)) or, respectively, the frequency value ($f_m$) pertaining to this, from a spectral estimation by means of an auto-regressive model of a short-time signal, taking account of only a few determined digital values inside the window, or the damping determined over the frequency range, or a linear combination function (CO($f_m$, $F_{AR(fm)}$)) from the maximum amplitude ($F_{AR}$) and the frequency value ($f_m$) pertaining to this;

- **a third one** (M3) represents the minimum damping value of a pole of a filter inside a frequency interval ($\Delta_r$) determined by the tool parameters, whereby the poles are calculated from the filter coefficients of an associated recursive filter, determined by way of an auto-regressive model of an individual impact shock wave signal, making use of predetermined model parameters for positive frequency values, and

- **a fourth one** (M4) provides the difference between two maxima of the same sign of the shock wave signal in the time range within a search interval, and that the several or all features ($M_1$ to $M_4$) are evaluated in the decision regarding the material determination of the underlying surface by way of a fuzzy interference system with the weighting allocated in each case.

**13.** Method according to Claim 9, **characterised in that**, before an evaluation by way of the fuzzy interference system, the features are in each case corrected by a factor which is dependent on the pressure force (p) and/or on the individual tool (2).

**14.** Apparatus on or allocated to a jackhammer for the demolition of an underlying surface, for the investigation and identification of the nature of the underlying surface to be demolished, with a sensor (1) acquiring a shock wave in the demolition tool (2), and an electronic processor unit, which evaluates the shock wave signal delivered by the sensor in accordance with at least one of the methods defined in the foregoing Claims, and, with the aid of the data acquired in this way, automatically adjusts a number of the operational parameters of the jackhammer which are essential for an optimum demolition procedure.

## Revendications

**1.** Procédé pour analyser et identifier la nature d'un support prévu pour être foré au moyen d'un marteau perforateur et pour fournir au moins un paramètre de fonctionnement permettant d'optimiser le préréglage du marteau perforateur, procédé dans lequel, avant ou au début d'une opération de forage, une onde de choc produite ou induite dans l'outil du marteau perforateur est enregistrée et au moins une propriété caractéristique du support est extraite du signal d'onde de choc ainsi mesuré et est analysée au moyen d'un algorithme pour classifier le support afin, à l'aide des données ainsi recueillies, de régler automatiquement au moins certains paramètres de fonctionnement du marteau perforateur essentiels à une opération de forage optimale.

**2.** Procédé selon la revendication 1, **caractérisé en ce que**, lors de la classification du support, au moins une force extérieure (p) agissant sur le marteau perforateur est également prise en compte.

**3.** Procédé selon la revendication 1 ou 2, **caractérisé en ce que** l'onde de choc est enregistrée par un capteur (1) qui fonctionne selon l'effet magnétoélastique, selon le principe de la jauge extensométrique ou selon le principe de la mesure des ondes de surface.

**4.** Procédé selon la revendication 1 ou 2, **caractérisé en ce que** l'onde de choc est enregistrée en mesurant, au moyen d'un microphone, les ondes aériennes qu'elle produit.

**5.** Procédé selon la revendication 3, **caractérisé en ce que** la composante longitudinale de l'onde de choc dans un axe d'outil du marteau perforateur (3) est enregistrée au moyen d'un capteur (1) sur la base de l'effet magnétoélastique.

**6.** Procédé selon une des revendications précédentes, dans lequel l'onde de choc induite dans le foret (2) alors utilisé comme outil est enregistrée et le signal d'onde de choc est analysé au moyen d'un algorithme pour connaître la propriété, au nombre d'au moins une, caractérisant, par l'intermédiaire de l'onde de choc, d'une part le foret et d'autre part le support, afin de régler en continup5 au moins un des paramètres de fonctionnement que sont la fréquence de percussion, l'énergie de percussion individuelle et/ou la vitesse de rotation.

**7.** Procédé selon la revendication 6, **caractérisé en ce que** l'extraction de la propriété caractéristique, au nombre d'au moins une, servant à identifier le support s'effectue au moyen d'un algorithme qui analyse une pluralité de signaux d'onde de choc ($E_i$), lesquels correspondent à différentes percussions de marteau perforateur et sont numérisés en valeurs de détection, à l'intérieur de fenêtres synchronisées les unes par rapport aux autres en termes de début de percussion, et **en ce que**, à partir des valeurs de propriété calculées des différentes percussions de marteau perforateur, une valeur de propriété caractéristique ($M_1$ à $M_4$) est déterminée par un procédé de moyennage.

8. Procédé selon la revendication 6, **caractérisé en ce que** le moyennage s'effectue sur la base des valeurs de propriété calculées pour les différentes percussions de marteau perforateur ($M_E$ = moyenne ($M(E_i)$)).

9. Procédé selon la revendication 6, **caractérisé en ce que** la détermination des valeurs de propriété s'effectue sur la base de la moyenne des différentes percussions de marteau perforateur calculée dans la plage temporelle ($M_E$ = moyenne ($M(E_i)$).

10. Procédé selon la revendication 7, **caractérisé en ce que** l'identification algorithmique de support est précédée par une identification d'outil et par un préréglage correspondant de paramètres de fonctionnement du marteau perforateur, opérations durant lesquelles est calculé le spectre moyenné d'un nombre défini de valeurs de détection de signaux d'onde de choc des spectres de percussions individuelles enregistrés lors d'une séquence de mesure et, à partir de celui-ci, sont déterminées plusieurs fréquences propres, c'est-à-dire des maxima locaux dans des zones prédéfinies, parmi lesquelles au moins deux sont utilisées pour déterminer des paramètres d'outil nécessaires au préréglage de paramètres de fonctionnement à l'aide d'un algorithme de régulation floue.

11. Procédé selon la revendication 9, **caractérisé en ce que** l'algorithme de régulation floue utilisé est du type Sugeno.

12. Procédé selon une des revendications 7 à 9, **caractérisé en ce que** l'identification de support par analyse algorithmique s'effectue en tenant compte de tout ou partie des propriétés caractéristiques suivantes (M1 à M4), parmi lesquelles

   - une **première** (M1) contient l'amplitude moyenne, calculée dans la plage temporelle selon le procédé de moyennage de la revendication 8, du spectre à énergie normée ($F_{en}$) d'un signal d'onde de choc de percussion individuelle à l'intérieur de la fenêtre considérée,
   - une **deuxième** (M2) indique, compte tenu d'une gamme de fréquences spécifique à l'outil, l'amplitude maximale ($F_{AR}(f_m)$), respectivement sa valeur de fréquence associée ($f_m$) à partir d'une estimation spectrale au moyen d'un modèle autorégressif d'un signal de courte durée ne tenant compte que de quelques valeurs numériques définies à l'intérieur de la fenêtre, ou l'amortissement déterminé sur la gamme de fréquences ou une fonction de combinaison linéaire ($CO(f_m, F_{AR}(f_m))$ à partir de l'amplitude maximale ($F_{AR}$) et de la valeur de fréquence associée ($f_m$) ;
   - une **troisième** (M3) correspond à la valeur minimale d'amortissement d'un pôle d'un filtre à l'intérieur d'un intervalle fréquentiel ($\Delta_f$) déterminé par l'intermédiaire des paramètres d'outil, les pôles étant calculés à partir des coefficients de filtrage d'un filtre récursif associé, défini par l'intermédiaire d'un modèle autorégressif d'un signal d'onde de choc de percussion individuelle en utilisant des paramètres de modèle définis pour des valeurs fréquentielles positives, et
   - une **quatrième** (M4) indique la différence de deux maxima de même signe du signal d'onde de choc dans la plage temporelle à l'intérieur d'un intervalle de recherche, et **en ce que**,

   pour se prononcer sur la nature du matériau du support, tout ou partie des propriétés ($M_1$ à $M_4$) sont évaluées par l'intermédiaire d'un système d'interférences floues avec une pondération associée à chacune d'entre elles.

13. Procédé selon la revendication 9, **caractérisé en ce que**, avant l'évaluation par l'intermédiaire du système d'interférences floues, les propriétés sont chacune corrigées selon un facteur dépendant de la force d'application (p) et/ou de l'outil utilisé (2).

14. Dispositif, monté sur ou associé à un marteau perforateur destiné au forage d'un support, pour analyser et identifier la nature du support à forer, comprenant un capteur (1), qui enregistre une onde de choc dans l'outil de forage (2), et une unité électronique de traitement, laquelle analyse le signal d'onde de choc fourni par le capteur selon un procédé défini dans au moins une des revendications précédentes et, à l'aide des données ainsi recueillies, règle automatiquement au moins quelques-uns des paramètres de fonctionnement du marteau perforateur essentiels au déroulement optimal du forage.

Fig. 1

## Fig. 2

**Materialwert**

1  Ziegel=1

$a_i$

Zwischenbereich

0  Beton=0

$t_1$    $t_2$    $M_i$

## Fig. 3

$P_2$

$P_1$

5

4

3

2

1

0

-1

-2

-3

$a_1$    $e_1 = a_2$    $e_2$

0    5    10    15    20

→ t

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 3518370

- DE 1985

### In der Beschreibung aufgeführte Nicht-Patentliteratur

- **SCHICKERT, G.** Vorträge und Plakatberichte International Symposium Zerströungsfreie Prüfung im Bauwesen. *Deutsche Gesellschaft für Zerstörungsfreie Prüfung e.V.,* 1991
- **SCHICKERT, G. ; WIGGENHAUSER H.** International Symposium Non-Destructive Testing in Civil Engineering (NDT-CE. *Deutsche Gesellschaft für Zerstörungsfreie Prüfung e. V.,* 1995
- **POLLITT, M. et al.** Lithological interpretation based on monitored drilling performance paramters. *CIM Bulletin,* Juli 1991, vol. 84 (985), 25-29

- **WAGNER, J.** Automatische Qualitäts-Kontroll-Systeme für Dachziege- lindustrie. 1995, 47
- **JONUSCHEIT, H.** *Neuronale Netze in der Produktion, Design & Elektronik*
- Nutzung mechanischer u. elektromechanischer Effekte zur Messung elastischer Wellen in Stäben. **HECKER, R. ; SCHRÖDER, P.** Nutzung mechanischer u. elektromechanischer Effekte zur Messung elastischer Wellen in Stäben. Verlag
- **KAMMEYER, K. ; KROSCHEL K.** *Digital Signalverarbeitung, Teubner Studien- bücher-Elektronik,* 1998